(19) Europäisches Patentamt
European Patent Office
Office européen des brevets

(11) **EP 3 321 668 B1**

(12) **EUROPÄISCHE PATENTSCHRIFT**

(45) Veröffentlichungstag und Bekanntmachung des Hinweises auf die Patenterteilung:
**20.10.2021  Patentblatt 2021/42**

(51) Int Cl.:
***G01N 21/89*** *(2006.01)*   *G01J 3/50* *(2006.01)*
*G01J 3/46* *(2006.01)*

(21) Anmeldenummer: **17201170.2**

(22) Anmeldetag: **10.11.2017**

(54) **VERFAHREN UND VORRICHTUNG ZUR BEURTEILUNG DER QUALITÄT EINES LÄNGSBEWEGTEN STRANGFÖRMIGEN GUTES**

METHOD AND APPARATUS FOR EVALUATING THE QUALITY OF A LONGITUDINALLY MOVING STRAND-SHAPED MATERIAL

PROCÉDÉ ET DISPOSITIF D'ÉVALUATION DE LA QUALITÉ D'UN PRODUIT EN FORME DE TRONÇON SE DÉPLAÇANT LONGITUDINALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2016  DE 102016121662**

(43) Veröffentlichungstag der Anmeldung:
**16.05.2018  Patentblatt 2018/20**

(73) Patentinhaber: **Saurer Spinning Solutions GmbH & Co. KG
52531 Übach-Palenberg (DE)**

(72) Erfinder:
• **Werheit, Dr. Patrick
  52066 Aachen (DE)**
• **Doß, Gudrun
  41844 Wegberg (DE)**

(74) Vertreter: **Schniedermeyer, Markus
Saurer Spinning Solutions GmbH & Co. KG
Patentabteilung
Carlstraße 60
52531 Übach-Palenberg (DE)**

(56) Entgegenhaltungen:
WO-A1-2004/063746      WO-A1-2010/015196
WO-A2-2007/012936      JP-A- H0 815 024

## Beschreibung

Die vorliegende Erfindung betrifft ein Verfahren und eine Vorrichtung zur Beurteilung der Qualität eines längsbewegten strangförmigen Gutes, insbesondere eines Garnes, wobei rote, grüne und blaue Farbanteile des vom Gut reflektierten Lichtes ausgewertet werden.

Zur Beurteilung der Qualität eines längsbewegten Garnes wird das Garn auf Durchmesserabweichungen und auf Verunreinigungen, insbesondere Fremdfasern, überwacht. Diese Beurteilung der Qualität dient zum einen dazu, während der Verarbeitung des Garnes zu entscheiden, ob ein Fehler entfernt werden muss, und zum anderen zur statistischen Auswertung. Das Entfernen von Fehlern im Garn bezeichnet man auch als Ausreinigen. Die statische Auswertung ermöglicht zum einen, Aussagen über die Qualität des fertigen Produktes zu treffen; zum anderen ermöglicht es, Unregelmäßigkeiten im Fertigungsprozess aufzudecken und zu beheben. Eine vergleichbare Beurteilung kann auch zum Beispiel für andere längsbewegte, strangförmige textile Güter, wie zum Beispiel Faserbänder, erfolgen.

Die EP 1 143 236 B1 offenbart eine optische Überwachung eines längsbewegten Garnes. Dabei wird das Garn mit Licht beaufschlagt und sowohl das vom Garn transmittierte als auch das vom Garn reflektierte Licht erfasst. Aus dem transmittierten Licht werden Durchmesserabweichungen bestimmt und mithilfe des reflektieren Lichtes werden Verunreinigungen detektiert. Bewertet wird nur die Menge des Lichtes, das heißt, seine Helligkeit. Farbige Fremdfasern werden indirekt über den Helligkeitsunterschied identifiziert. Die Wahrnehmung eines solchen Sensors unterscheidet sich deutlich von der des menschlichen Auges. Um für das menschliche Auge gut wahrnehmbare Fremdfasern sicher auszureinigen, muss die Reinigungsgrenze schärfer eingestellt werden, so dass gegebenenfalls auch unnötig Fehler ausgereinigt werden.

In der EP 1 018 645 A1 wurde bereits vorgeschlagen, vom Garn reflektiertes Licht durch Farbsensoren, die jeweils empfindlich für rotes, grünes und blaues Licht sind, zu erfassen. Es werden die Differenzen zwischen den Intensitäten der drei Farben ermittelt und bei Überschreiten eines Schwellwertes ein Fremdstoff angezeigt. Das System bewertet alle drei Farben gleich und weicht damit immer noch von der Wahrnehmung des menschlichen Auges ab.

Die WO2007/012936A2 geht noch einen Schritt weiter. Um Fremdstoffe in strangförmigen textilem Material zu erfassen und zu kategorisieren, wird das Material mit polychromatischem Licht beaufschlagt. Das vom Garn reflektierte Licht wird mittels Sensoren mit einer Empfindlichkeit für das rote, blaue und grüne Spektrum erfasst. Es werden rote, grüne und blaue Intensitätssignale ermittelt. Aus den roten, grünen und blauen Intensitätssignalen werden die x- und y-Parameter des CIEYxy-Farbraumes, auch als CIE-Normvalenzsystem bezeichnet, ermittelt. Zur Ermittlung der x- und y-Parameter werden aus den RGB-Werten, das heißt, aus den roten, grünen und blauen Intensitätssignalen, die Normfarbwerte X, Y, Z berechnet.

Das CIE-Normvalenzsystem berücksichtigt bereits in gewissem Maße die Wahrnehmung des menschlichen Auges. Außerdem erfolgt eine Trennung von Farbe und Helligkeit. Die Parameter x und y repräsentieren nur die Farbe. Die Parameter x und y bestimmen also eine Farbebene innerhalb des CIEYxy-Farbraumes. Gemäß der WO 2007/012936 A2 sollen die Einflüsse der Helligkeit eliminiert werden und nur die x- und y-Parameter ausgewertet werden. Dadurch sollen Durchmessereinflüsse und sonstige nicht durch Fremdstoffe verursachte Schwankungen kompensiert werden.

Nachteilig an diesem System ist jedoch, dass dunkle, insbesondere schwarze oder braune Fremdstoffe, gar nicht oder zumindest nicht zuverlässig in einem, in den meisten Fällen, weißen Garn erkannt werden können. Außerdem gibt es mit dem beschriebenen System keine Möglichkeit, Dick- oder Dünnstellen zu detektieren. Zu diesem Zweck sind gemäß dem Stand der Technik zusätzliche Einrichtungen erforderlich.

Es ist die Aufgabe der vorliegenden Erfindung, ein Verfahren und eine Vorrichtung zur Verfügung zu stellen, die auf einfache und zuverlässige Weise die Beurteilung der Qualität eines längsbewegten strangförmigen Gutes, insbesondere eines Garnes, ermöglichen.

Zur Lösung der Aufgabe wird ein Verfahren nach Anspruch 1 mit den folgenden Schritten vorgeschlagen.

Das Gut wird mit polychromatischem, vorzugsweise weißem, Licht, beaufschlagt.

Ein Messsignal, das die roten, grünen und blauen Farbanteile des vom Gut reflektierten Lichtes repräsentiert, wird erfasst. Die roten, grünen und blauen Farbanteile werden in einen Bewertungs-Farbraum transformiert, in dem Messpunkte des Messsignals durch eine erste und eine zweite Koordinate, die die Farbe repräsentieren, und durch eine dritte Koordinate, die die Helligkeit repräsentiert, beschrieben werden. Erfindungsgemäß erfolgt die Beurteilung der Qualität des Gutes anhand der ersten, zweiten und dritten Koordinate der Messpunkte in dem Bewertungs-Farbraum.

Die vorliegende Erfindung enthält zwei wesentliche Bestandteile. Zum einen findet ein Farbraum Verwendung, der die Farbe von der Helligkeit trennt, wie dies an sich auch im Stand der Technik bekannt ist. Im Unterschied zum Stand der Technik werden jedoch nicht nur die erste und zweite Koordinate, die die Farbe repräsentieren, für die Beurteilung des Gutes herangezogen, sondern auch die dritte Koordinate, die die Helligkeit repräsentiert.

Durch geeignete Verknüpfung und Vergleich der drei Koordinaten ist es möglich, Fremdstoffe von Durchmesserabweichungen zu unterscheiden. So wird eine farbige Fremdfaser eine Änderung der ersten und/oder zweiten Koordinate des Messpunktes bewirken. Die dritte Koordinate bleibt durch die farbige Fremdfaser jedoch im Wesentlichen unbeeinflusst. Bei einer Dickstelle hingegen wird sich die dritte Koordinate des Messpunktes im Vergleich zum normalen Garn vergrößern. Die erste und zweite Koordinate hingegen bleibt durch eine Dickstelle unbeeinflusst.

Auch schwarze Fremdfasern können durch das erfindungsgemäße Verfahren detektiert werden. Eine schwarze Fremdfaser verursacht keine Änderung der Farbkoordinaten, das heißt, der ersten und zweiten Koordinate. Die Helligkeitskoordinate, das heißt, die dritte Koordinate, wird sich jedoch gegenüber dem normalen Garn verringern, da die schwarze Fremdfaser weniger Licht reflektiert.

Die Berücksichtigung aller drei Koordinaten des Bewertungs-Farbraumes bei der Beurteilung der Qualität des längsbewegten strangförmigen Gutes eröffnet vielfältige Möglichkeiten, Fehler in dem Gut zu unterscheiden oder überhaupt erst zu erkennen. Der bekannte Messaufbau muss nicht verändert werden, lediglich die Auswertung wird erfindungsgemäß erweitert.

Um die Messpunkte in dem Bewertungs-Farbraum zu beurteilen, wird vorzugsweise ein Referenzpunkt in dem Bewertungs-Farbraum ebenfalls durch eine erste, zweite und dritte Koordinate definiert und die Messpunkte werden mit dem Referenzpunkt in dem Bewertungs-Farbraum verglichen. Der Referenzpunkt kann als Mittelwert von Messpunkten des längsbewegten textilen Gutes ermittelt werden.

Zur Bewertung der Messpunkte können die Koordinaten der Messpunkte selbst mit den Koordinaten des Referenzpunktes verglichen werden. Die Koordinaten oder die Unterschiede der Koordinaten von Messpunkt und Referenzpunkt können auch miteinander verknüpft werden. Dadurch kann gegebenenfalls die Beurteilung des Gutes vereinfacht werden.

Vorzugsweise kann ein Abstand der Messpunkte von dem Referenzpunkt im Bewertungs-Farbraum ermittelt werden. Je nach verwendetem Bewertungs-Farbraum sind verschiedene Definitionen für den Abstand möglich. Der gängigste Abstand ist der euklidische Abstand. Der Abstand im Bewertungs-Farbraum zeigt nahezu alle Fehler in dem Gut an. Dazu gehören insbesondere farbige Fremdfasern, schwarze Fremdfasern und Durchmesserabweichungen. Um die einzelnen Fehler unterscheiden zu können, sind weitere Bewertungen erforderlich.

So kann die Helligkeit repräsentierende dritte Koordinate der Messpunkte mit der dritten Koordinate des Referenzpunktes verglichen werden, um die durch den Abstand im Bewertungs-Farbraum detektierten Fehler voneinander zu unterscheiden. So erzeugt die farbige Fremdfaser keine wesentliche Änderung in der Helligkeitskoordinate. Eine Dickstelle führt zu einer Vergrößerung der Helligkeitskoordinate.

Weiter kann ein Abstand der Messpunkte von dem Referenzpunkt in der durch die ersten und zweiten Koordinaten aufgespannten Farbebene des Bewertungs-Farbraumes ermittelt werden. Präziser ausgedrückt wird der Abstand der Projektion des Messpunktes von der Projektion des Referenzpunktes auf die von den ersten und zweiten Koordinaten aufgespannten Farbebene des Bewertungs-Farbraumes ermittelt. Der Abstand in der Farbebene kann entweder in Verbindung mit dem Abstand im Farbraum, oder in Verbindung mit der Helligkeitskoordinate zur Unterscheidung verschiedener Fehler im Gut herangezogen werden.

Zur Bewertung eines Fehlers im längsbewegten strangförmigen Gut kann vorteilhafterweise die Differenz und/oder das Produkt eines Abstandes der Messpunkte von dem Referenzpunkt im Bewertungs-Farbraum und eines Abstandes der Messpunkte von dem Referenzpunkt, in der durch die ersten und zweiten Koordinaten aufgespannten Farbebene des Bewertungs-Farbraumes berechnet werden. Entsprechend den vorgenannten Beispielen wird bei einer farbigen Fremdfaser die Differenz der Abstände klein sein, beziehungsweise einen vorgegebenen Wert unterschreiten. Das Produkt ist bei einer farbigen Fremdfaser entsprechend groß, überschreitet also einen vorgegebenen Wert. Bei einer Durchmesserabweichung ist die Differenz der Abstände groß, überschreitet also einen vorgegebenen Wert, wohingegen das Produkt der Abstände klein ist, also einen vorgegebenen Wert unterschreitet.

Als Bewertungs-Farbraum wird vorzugsweise der CIELAB oder der CIELCH Raum verwendet. Diese Farbräume spiegeln besser die Wahrnehmung des menschlichen Auges wider als der CIEYxy Raum. Die Abstände der Messpunkte von dem Referenzpunkt in dem CIELAB bzw. CIELCH Raum können mittels des euklidischen Abstandes, aber auch mittels der DE CMC Formel oder CIEDE 2000 Formel ermittelt werden. Letztere versuchen, die Darstellung von Farbunterschieden noch besser an die Wahrnehmung des menschlichen Auges anzupassen.

Die Aufgabe wird außerdem durch eine Vorrichtung nach Anspruch 8 zur Beurteilung der Qualität eines längsbewegten strangförmigen Gutes, insbesondere eines Garnes, gelöst, die zur Durchführung des erfindungsgemäßen Verfahrens ausgebildet ist. Die Vorrichtung umfasst eine Lichtquelle, die so ausgebildet und angeordnet ist, dass sie das Gut mit polychromatischem, vorzugsweise weißem Licht, beaufschlagt, und einen Sensor, der so ausgebildet und angeordnet ist, dass er die roten, grünen und blauen Farbanteile des vom Gut reflektierten Lichtes erfasst und ein Messsignal erzeugt, das die roten, grünen und blauen Farbanteile des vom Gut reflektierten Lichtes repräsentiert. Die erfindungsgemäße Vorrichtung umfasst außerdem eine Auswerteeinheit, die dazu ausgebildet ist, die roten, grünen und blauen Farbanteile in einen Bewertungs-Farbraum zu transformieren, in dem Messpunkte des Messsignals durch eine erste und eine zweite Koordinate, die die Farbe repräsentieren, und durch eine dritte Koordinate, die die Helligkeit repräsentiert, beschrieben werden, und die Beurteilung der Qualität des Gutes anhand der ersten, zweiten und dritten Koordinate des Messsignals in dem Bewertungs-Farbraum durchzuführen.

Die Erfindung wird nachfolgend anhand eines in den Zeichnungen dargestellten Ausführungsbeispiels näher erläutert.

Es zeigen:

Fig. 1      eine erfindungsgemäße Vorrichtung zur Beurteilung der Qualität eines längsbewegten Garnes;

Fig. 2      eine Darstellung des CIELAB Farbraumes;

Fig. 3      eine Darstellung der Farbebene des CIELAB Farbraumes;

Fig. 4      eine Darstellung eines Messpunktes und eines Referenzpunktes in der Farbeebene;

Fig. 5      eine Darstellung verschiedener Größen über die Garnlänge für ein Garn mit einer farbigen Fremdfaser;

Fig. 6      eine Darstellung verschiedener Größen über die Garnlänge für ein Garn mit einer Dickstelle;

Fig. 7      eine Darstellung verschiedener Größen über die Garnlänge für ein Garn mit einer schwarzen Fremdfaser.

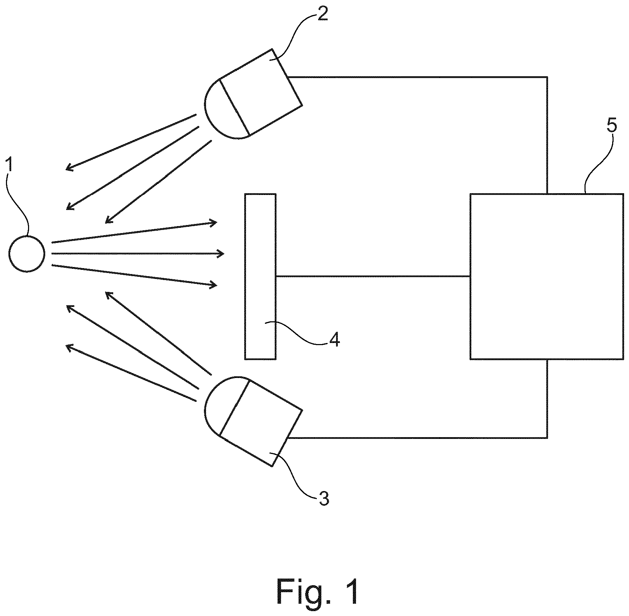

Die Fig. 1 zeigt schematisch den Aufbau einer erfindungsgemäßen Vorrichtung zur Beurteilung der Qualität eines längsbewegten Garnes. Das Garn 1 wird mittels einer Lichtquelle mit polychromatischen Licht beaufschlagt. In dem gezeigten Ausführungsbeispiel besteht die Lichtquelle aus zwei Weißlichtdioden 2 und 3. Ein Sensor 4 ist so angeordnet, dass er das vom Garn 1 reflektierte Licht erfasst. Der Sensor 4 ist empfindlich für rotes, grünes und blaues Licht. Er generiert drei Signale aR, bG und cB, die jeweils der Intensität des roten, grünen und blauen Lichtes entsprechen. Die Signale aR, bG und cB können dann an die Auswerteeinheit 5 zur Beurteilung der Qualität des Garnes weitergegeben werden. In dem vorliegenden Ausführungsbeispiel ist der Sensor 4 jedoch als True-Color-Sensor ausgebildet, der bereits über eine eigene, nicht näher dargestellte Auswertung verfügt. Der Sensor 4 rechnet die Signale aR, bG und cB mittels einer vorgebbaren Kalibiermatrix in die Normfarbwerte X, Y, Z um. Die Normfarbwerte X, Y, Z werden dann in der Auswerteinheit 5 weiter verarbeitet.

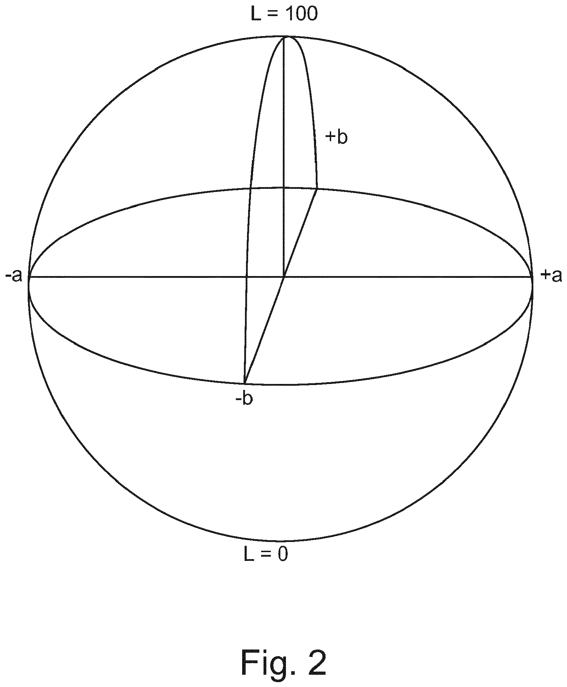

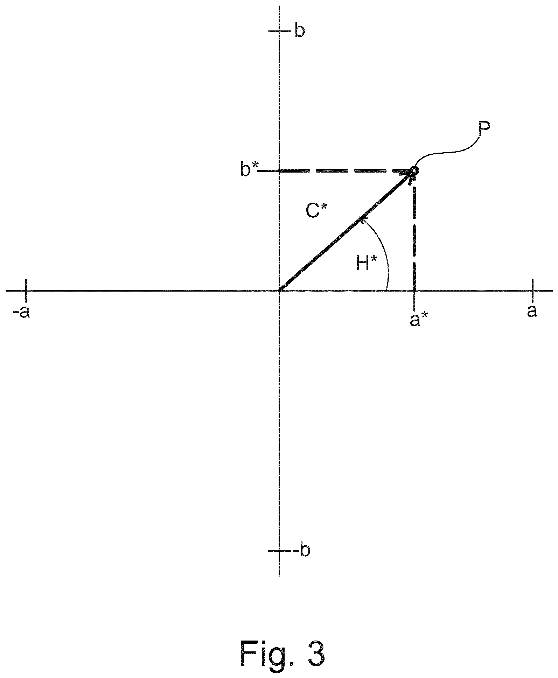

In dem dargestellten Ausführungsbeispiel werden die Normfarbwerte X, Y, Z von der Auswerteeinheit 5 in den CIELAB Raum transformiert. Die Darstellung in Fig. 2 soll den Aufbau des CIELAB Raumes verdeutlichen. Der CIELAB Raum ist ein dreidimensionaler Farbraum. Die Farben werden innerhalb einer Kugel dargestellt. Ein Punkt in dem Farbraum wird durch die drei Koordinaten L*, a*, b* bestimmt. Die Achsen a* und b* spannen innerhalb des Raumes eine Farbebene auf. Die a*-Achse entspricht dabei der Grün-Rot-Achse, wobei -a grün entspricht und +a rot. Die b*-Achse beschreibt die Gelb-Blau-Achse, wobei -b blau darstellt und +b gelb. Die dritte Achse ist die Helligkeitsachse L*. L gleich Null entspricht dabei schwarz und L gleich 100 entspricht weiß. In dem CIELAB Raum kann also die Farbe und die Helligkeit der Farbe unabhängig voneinander dargestellt werden. Anders als bei einem Flächengebilde wird die Helligkeitskoordinate bei einem strangförmigen Gut nicht nur durch die Helligkeit der Farbe, sondern auch durch den Durchmesser des Gutes bestimmt, da der Durchmesser die Menge des reflektierten Lichtes beeinflusst. Durch geeignete Verknüpfung und Vergleich der drei Koordinaten L*, a*, b* können Fehler im Gut zuverlässig erkannt und verschiedene Fehler voneinander unterschieden werden. Neben der Darstellung in den kartesischen Koordinaten a*, b* kann die Lage eines Farbpunktes P in der Farbebene auch durch Polarkoordinaten C* und H beschrieben werden. Die Fig. 3 zeigt eine entsprechende Darstellung. Dabei beschreibt C* die Buntheit oder Chroma und H den Farbton oder Farbtonwinkel. Die Helligkeitsachse L* bleibt unverändert. Bei der Verwendung von Polarkoordinaten spricht man auch vom CIELCH Raum.

Der Sensor 4 generiert ein Messsignal, das aus drei Farbsignalen aR, bG, cB besteht. Durch entsprechende Abtastung des Messsignals ergeben sich Messpunkte. Die Messpunkte M werden dann in dem gewählten Farbraum, in dem vorliegenden Ausführungsbeispiel in dem CIELAB Raum, mit einem Referenzpunkt R verglichen. Die Auswerteeinheit 5 führt die dazu notwendigen Berechnungen und Vergleiche aus.

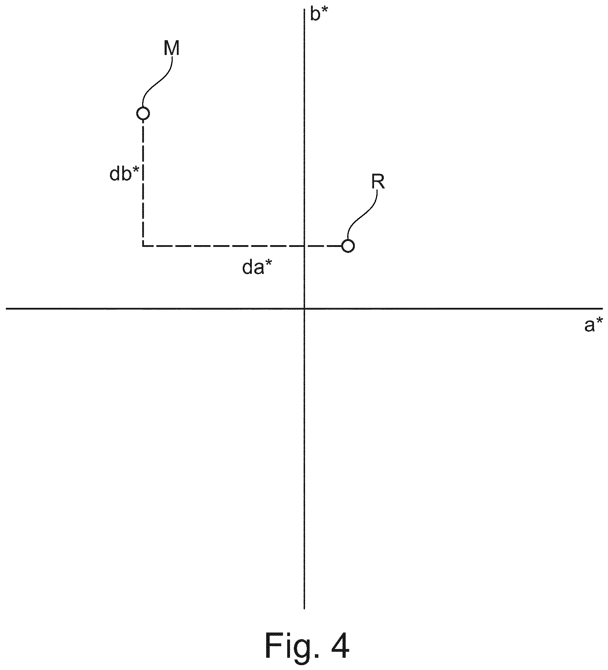

In der Fig. 4 ist ein Referenzpunkt R und ein Messpunkt M in der a*b*-Ebene dargestellt. Der Referenzpunkt kann durch Einmessen des Garnes bzw. strangförmigen Gutes ermittelt werden. Der Referenzpunkt R kann dann als langfristiger Mittelwert von Messpunkten M berechnet werden. Zur weiteren Auswertung können die Unterschiede beziehungsweise Differenzen der Koordinaten von Messpunkt und Referenzpunkt ermittelt werden. Dabei ist da* die Differenz in der a*-Achse und db* die Differenz in der b*-Achse. Es ist erfindungswesentlich für die Auswertung und Beurteilung der Qualität des Garns bzw. strangförmigen Gutes, auch die Koordinate L* der Helligkeitsachse zu berücksichtigen. Deshalb wird vorzugsweise auch die Differenz dL* der Helligkeitskoordinaten L* von Referenzpunkt und Messpunkt ermittelt. Die Betrachtung der Differenz dL* stellt die einfachste Möglichkeit dar, die Helligkeitskoordinaten L* von Referenzpunkt und Messpunkt miteinander zu vergleichen. Die Differenz dL* berechnet sich aus der Helligkeitskoordinate $L^*_M$ des Messpunktes und der Helligkeitskoordinate $L^*_R$ des Referenzpunktes.

$$dL^* = L^*_M - L^*_R$$

Um die Koordinaten L*, a*, b* der Messpunkte zu bewerten und damit die Qualität des strangförmigen Gutes zu beurteilen, können aus den Koordinaten L*, a*, b* beziehungsweise aus den oben erläuterten Differenzen dL*, da* und db* weitere Größen berechnet werden, die die Beurteilung erleichtern. Erfindungswesentlich ist, dass alle drei Koordinaten zumindest mittelbar in die Gesamtbeurteilung einfließen.

In die Beurteilung können alle oder ein Teil der folgenden Größen einfließen.

Euklidischer Abstand deltaE im L*, a*, b*-Farbraum:

$$deltaE = \sqrt{(dL^*)^2 + (da^*)^2 + (db^*)^2}$$

Euklidischer Abstand delta a*b* in der a*b*-Farbebene:

$$delta\ a^*b^* = \sqrt{(da^*)^2 + (db^*)^2}$$

Produkt X aus deltaE und delta a*b*

$$X = (delta\ a^*b^*) \cdot (deltaE)$$

Differenz Δ aus deltaE und delta a*b*

$$\Delta = (deltaE) - (delta\ a^*b^*) \cdot$$

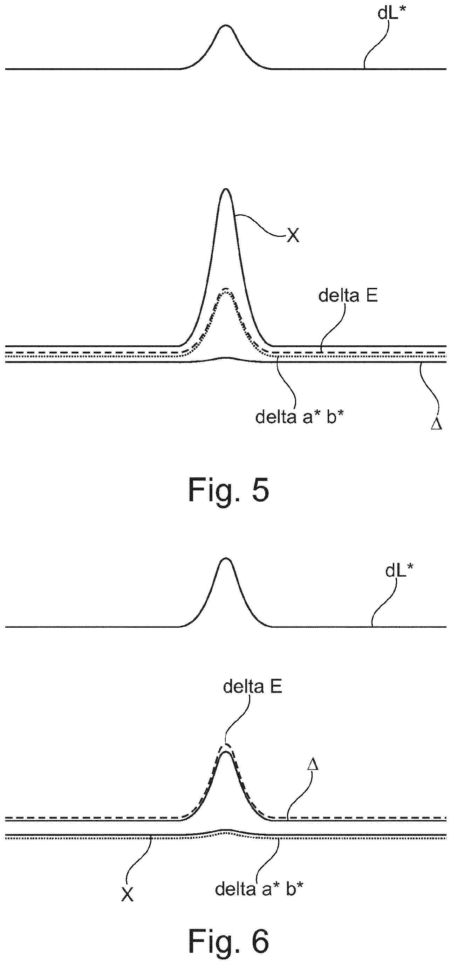

In den Figuren 5 und 6 sind die zuvor erläuterten Größen über die Garnlänge aufgetragen. Die Fig. 5 entspricht dem Verlauf bei einer farbigen Fremdfaser und die Fig. 6 dem Verlauf bei einer Dickstelle. Anhand der Figuren 5 und 6 soll exemplarisch erläutert werden, wie man mittels der Koordinaten L*, a*, b* der Messpunkte in dem CIELAB beziehungsweise der daraus abgeleiteten Größen die beiden Fehlstellen voneinander unterscheiden kann. Aufgetragen sind jeweils im oberen Bereich die Helligkeitsabweichungen dL* und darunter die Abstände deltaE und delta a*b* sowie das Produkt X und die Differenz Δ aus den beiden Abständen.

In dem Beispiel, das in Fig. 5 dargestellt ist, führt auch die Fremdfaser zu einer Helligkeitsabweichung, da auch die Fremdfaser den Durchmesser beeinflusst. Weiter sieht man, wie bei einer farbigen Fremdfaser leicht nachvollziehbar, eine deutliche Farbabweichung delta a*b*. Der Abstand deltaE zum Referenzpunkt im Farbraum beinhaltet sowohl die Farbabweichung als auch die Helligkeitsabweichung. Die Helligkeitsabweichung ist jedoch im Vergleich zur Farbabweichung gering, so dass deltaE nur unwesentlich größer ist als delta a*b*. Deutlicher werden die Verhältnisse, wenn man das Produkt X und die Differenz Δ von deltaE und delta a*b* betrachtet. Da sowohl deltaE als auch delta a*b* groß sind, verstärkt das Produkt X die Größe der beiden Abstände deltaE und delta a*b*. Die Differenz Δ von deltaE und delta a*b* ist jedoch klein, da der Unterschied der beiden Abstände gering ist.

Bei einer reinen Dickstelle sehen die Verhältnisse völlig anders aus. Die Helligkeitsabweichung dL* zeigt jedoch ebenfalls eine Erhöhung, da von der Dickstelle mehr Licht reflektiert wird. Der Abstand delta a*b* in der Farbebene zeigt keine nennenswerten Veränderungen, da die Dickstelle aus dem gleichen Material besteht wie das Garn. Aufgrund der Abweichung dL* in der Helligkeit ist jedoch eine Veränderung in dem Abstand deltaE in dem Farbraum zu verzeichnen. Diese Unterschiede können wieder durch das Produkt X und die Differenz Δ verdeutlicht werden. Da der Faktor delta a*b* vernachlässigbar klein ist, gilt das gleiche auch für das Produkt X. Die Differenz Δ stimmt annähernd mit dem Abstand deltaE überein.

Bei einer praktischen Ausführung der vorliegenden Erfindung können für einige, oder alle der oben genannten Größen ein oder mehrere Grenzwerte definiert werden, deren Über- oder Unterschreiten in bestimmten Kombinationen bestimmte Arten von Garnfehlern anzeigen.

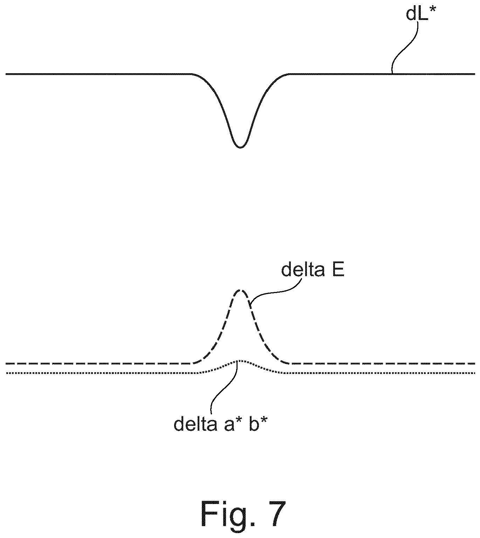

Die Fig. 7 zeigt ein weiteres Beispiel eines Garnfehlers. Hierbei handelt es sich um ein Garn mit einer schwarzen Fremdfaser. Die schwarze Fremdfaser verhält sich im Farbraum ähnlich wie eine Dickstelle. Es gibt jedoch einen wesentlichen Unterschied: eine schwarze Fremdfaser reduziert die erfasste Helligkeit. Die Differenz dL* ist also negativ. Diese Helligkeitsänderung ist in dem Abstand deltaE wiederzufinden. Das negative Vorzeichen der Differenz dL* geht allerdings durch das Quadrieren verloren, so dass deltaE wie bei einer Dickstelle positiv ist. Der Abstand delta a*b* bleibt bei einer schwarzen oder auch sehr dunklen Fremdfaser, wie bei einer Dickstelle vernachlässigbar.

Eine Dünnstelle liefert zumindest qualitativ den gleichen Verlauf wie eine schwarze Fremdfaser. Auch hier ist die Differenz dL* negativ. Um trotzdem eine Unterscheidung zwischen einer Dünnstelle und einer schwarzen Fremdfaser vornehmen zu können, können weitere Kriterien herangezogen werden. Ein solches Kriterium kann beispielsweise die Länge des Fehlers sein. Die Dünnstelle ist eher ein langer Fehler, wohingegen die schwarze Fremdfaser eher ein kurzer Fehler ist. Die Länge des Fehlers kann also mit geeigneten Schwellwerten verglichen werden.

**Patentansprüche**

1. Verfahren zur Beurteilung der Qualität eines längsbewegten strangförmigen Gutes (1), insbesondere eines Garnes, umfassend die Schritte

   Beaufschlagen des Gutes (1) mit polychromatischem, vorzugsweise weißem, Licht, Erfassen eines Messsignals, das die roten, grünen und blauen Farbanteile (aR, bG, cB) des vom Gut reflektierten Lichtes repräsentiert,
Transformieren der roten, grünen und blauen Farbanteile (aR, bG, cB) in einen Bewertungs-Farbraum, in dem Messpunkte (M) des Messsignals durch eine erste (a*) und eine zweite Koordinate (b*), die die Farbe repräsentieren, und durch eine dritte Koordinate (L*), die die Helligkeit repräsentiert, beschrieben werden,
**dadurch gekennzeichnet, dass**
die Beurteilung der Qualität des Gutes (1) anhand der ersten (a*), zweiten (b*) und dritten (L*) Koordinate der Messpunkte (M) in dem Bewertungs-Farbraum erfolgt.

2. Verfahren nach Anspruch 1, **dadurch gekennzeichnet, dass** ein Referenzpunkt (R) in dem Bewertungs-Farbraum ebenfalls durch eine erste (a*), zweite (b*) und dritte (L*) Koordinate definiert ist und dass die Messpunkte (M) mit dem Referenzpunkt (R) in dem Bewertungs-Farbraum verglichen werden.

3. Verfahren nach Anspruch 2, **dadurch gekennzeichnet, dass** ein Abstand (deltaE) der Messpunkte (M) von dem Referenzpunkt (R) im Bewertungs-Farbraum ermittelt wird.

4. Verfahren nach Anspruch 2 oder 3, **dadurch gekennzeichnet, dass** die die Helligkeit repräsentierende dritte Koordinate ($L^*_M$) der Messpunkte (M) mit der dritten Koordinate ($L^*_R$) des Referenzpunktes (R) verglichen wird.

5. Verfahren nach einem der Ansprüche 2 bis 4, **dadurch gekennzeichnet, dass** ein Abstand (delta a*b*) der Messpunkte (M) von dem Referenzpunkt (R) in der durch die ersten (a*) und zweiten (b*) Koordinaten aufgespannten Farbebene des Bewertungs-Farbraumes ermittelt wird.

6. Verfahren nach einem der Ansprüche 2 bis 5, **dadurch gekennzeichnet, dass** die Differenz ($\Delta$) und/oder das Produkt (X) eines Abstandes (deltaE) der Messpunkte (M) von dem Referenzpunkt (R) im Bewertungs-Farbraum und eines Abstandes (delta a*b*) der Messpunkte (M) von dem Referenzpunkt (R) in der durch die ersten (a*) und zweiten (b*) Koordinaten aufgespannten Farbebene des Bewertungs-Farbraumes zur Bewertung des Gutes (1) berechnet wird.

7. Verfahren nach einem der vorherigen Ansprüche, **dadurch gekennzeichnet, dass** als Bewertungs-Farbraum der CIELAB oder der CIELCH Raum verwendet wird.

8. Vorrichtung zur Beurteilung der Qualität eines längsbewegten strangförmigen Gutes (1), insbesondere eines Garnes, und zur Durchführung des Verfahrens nach einem der Ansprüche 1 bis 7 umfassend

eine Lichtquelle (2, 3), die so ausgebildet und angeordnet ist, dass sie das Gut (1) mit polychromatischem, vorzugsweise weißem Licht, beaufschlagt, einen Sensor (4), der so ausgebildet und angeordnet ist, dass er die roten, grünen und blauen Farbanteile (aR, bG, cB) des vom Gut (1) reflektierten Lichtes erfasst und ein Messsignal erzeugt, das die roten, grünen und blauen Farbanteile (aR, bG, cB) des vom Gut (1) reflektierten Lichtes repräsentiert, und
und eine Auswerteeinheit (5), die dazu ausgebildet ist, die roten, grünen und blauen Farbanteile (aR, bG, cB) in einen Bewertungs-Farbraum zu transformieren, in dem Messpunkte (M) des Messsignals durch eine erste (a*) und eine zweite (b*) Koordinate, die die Farbe repräsentieren, und durch eine dritte (L*) Koordinate, die die Helligkeit repräsentiert, beschrieben werden,
**dadurch gekennzeichnet, dass**
die Auswerteeinheit (5) dazu ausgebildet ist, die Beurteilung der Qualität des Gutes (1) anhand der ersten (a*), zweiten (b*) und dritten (L*) Koordinate des Messpunktes (M) in dem Bewertungs-Farbraum durchzuführen.

## Claims

1. Method for evaluating the quality of a longitudinally moving strand-shaped material (1), in particular a yarn, comprising the steps

applying of polychromatic, preferably white light to the material (1);
detection of a measurement signal which represents the red, green and blue (Ra, bG, cB) colour component of light reflected from the material;
transforming of the red, green and blue colour components (Ra, bG, cB) into an evaluation colour space, in which the measurement points (M) of the measurement signal are represented by a first (a*) and a second coordinate (b*) representing the colour, and by a third coordinate (L*) that represents the brightness;
**characterized in that,**
the evaluation of the quality of the material (1) is carried out based upon the first (a*), second (b*) and third (L*) coordinates of the measurement points (M) in the evaluation colour space.

2. Method according to claim 1, **characterized in that** a reference point (R) in the evaluation colour space is also defined by a first (a*), second (b*) and third (L*) coordinate and that the measurement points (M) is compared with the reference point (R) in the evaluation colour space.

3. Method according to claim 2, **characterized in that** a distance (deltaE) of the measurement points (M) from the reference point (R) is determined in the evaluation colour space.

4. Method according to claim 2 or 3, **characterized in that** the third coordinate ($L^*_M$) representing the brightness of the measurement points (M) is compared with the third coordinate ($L^*_R$) of the reference point (R).

5. Method according to one of the claims 2 to 4, **characterized in that** a distance (delta a*b*) of the measurement points (M) from the reference point (R) is determined in the colour plane of the evaluation colour space delineated by the first (a*) and second (b*) coordinates.

6. Method according to one of the claims 2 to 5, **characterized in that** the difference ($\Delta$) and/ or the product (X) of a distance (deltaE) of the measurement points (M) from the reference point (R) in the evaluation colour space and a distance (delta a*b*) of the measurement points (M) from the reference point (R) in the colour plane of the evaluation colour space delineated by the first (a*) and second (b*) coordinates are calculated in order to evaluate the material (1).

7. Method according to one of the previous claims, **characterized in that** the CIELAB or the CIELCH space is used as an evaluation colour space.

8. Apparatus for the evaluation of the quality of a longitudinally moving strand-shaped material (1), in particular a yarn, and for carrying out the method according to one of the claims 1 to 7, comprising,

a light source (2, 3), which is designed and arranged in such a way that polychromatic, preferably white light is applied to the material (1); a sensor (4), which is designed and arranged in such a way that it detects the red, green and blue coloured components (aR, bG, cB) of light reflected from a material (1) and produces a measurement signal, which represents the red, green and blue colour components (aR, bG, CB) of the light reflected from the material (1), and an evaluation unit (5), which is designed to transform the red, green and blue colour components (aR, bG, cB) in an evaluation colour space, in which the measurement points (M) of the measurement signals are described by a first (a*) and a second (b*) coordinate, which represent the colour and by a third (L*) coordinate, which represents the brightness,
**characterized in that**
the evaluation unit (5) has been designed to carry out the evaluation of the quality of the material (1) based upon the first (a*), second (b*) and third (L*) coordinate of the measurement point (M) in the evaluation colour space.

## Revendications

1. Procédé d'évaluation de la qualité d'un matériau (1) en forme de corde déplacé dans le sens longitudinal, en particulier un fil, comprenant l'étape

d'alimentation du matériau (1) avec une lumière polychrome, de préférence blanche, de détection d'un signal de mesure qui représente la part de couleur rouge, verte et bleue (aR, bG, cB) de la lumière réfléchie par le matériau, de transformation de la part de couleur rouge, verte et bleue (aR, bG, cB) dans un espace chromatique d'évaluation, où le point de mesure (M) du signal de mesure est décrit par une première (a*) et une deuxième coordonnée (b*), qui représente la couleur, et par une troisième coordonnée (L*), qui représente la clarté, **caractérisé en ce que** l'appréciation de la qualité d'un matériau (1) est réalisée à l'aide de la première (a*), la deuxième (b*) et la troisième (L*) coordonnée du point de mesure (M) d'un espace chromatique d'évaluation.

2. Procédé selon la revendication 1, **caractérisé en ce qu'**un point de référence (R) dans l'espace chromatique d'évaluation est également défini par une première (a*), une deuxième (b*) et une troisième (L*) coordonnée et **en ce que** le point de mesure (M) est comparé au point de référence (R) dans l'espace chromatique d'évaluation.

3. Procédé selon la revendication 2, **caractérisé en ce qu'**un écart (deltaE) du point de mesure (M) est déterminé par rapport au point de référence (R) dans l'espace chromatique d'évaluation.

4. Procédé selon la revendication 2 ou 3, **caractérisé en ce que** la troisième coordonnée représentant la clarté ($L^*_M$) est comparée à la troisième coordonnée ($L^*_R$) du point de référence (R).

5. Procédé selon une des revendications 2 à 4, **caractérisé en ce qu'**un écart (delta a*b*) du point de mesure (M) par rapport au point de référence (R) est déterminé dans le niveau de couleur de l'espace chromatique d'évaluation par la première (a*) et la deuxième (b*) coordonnées.

**6.** Procédé selon une des revendications 2 à 5, **caractérisé en ce que** la différence ($\Delta$) et/ou le produit (X) d'un écart (deltaE) du point de mesure (M) par rapport au point de référence (R) dans l'espace chromatique d'évaluation et d'un écart (delta a*b*) du point de mesure (M) par rapport au point de référence (R) est calculé dans le niveau de couleur de l'espace chromatique d'évaluation par la première (a*) et la deuxième (b*) coordonnées pour l'évaluation d'un matériau (1).

**7.** Procédé selon une des revendications précédentes, **caractérisé en ce qu'**il est utilisé comme espace chromatique d'évaluation du CIELAB ou de l'espace CIELCH.

**8.** Dispositif d'évaluation de la qualité d'un matériau (1) en forme de corde déplacé dans le sens longitudinal, en particulier un fil, en vue de la réalisation du procédé selon une des revendications 1 à 7 comprenant

une source de lumière (2, 3), formée et ordonnée de sorte que le matériau (1) est alimenté en lumière polychrome de préférence blanche, un capteur (4) formé et ordonné de sorte qu'il perçoive la part de couleur rouge, verte et bleue (aR, bG, cB) de la lumière réfléchie par le matériau (1) et produise un signal de mesure qui représente la part de couleur rouge, verte et bleue (aR, bG, cB) de la lumière réfléchie par le matériau (1), et
une unité de contrôle (5) qui y est fixée pour transformer la part de couleur rouge, verte et bleue (aR, bG, cB) dans un espace chromatique d'évaluation, où le point de mesure (M) du signal de mesure est décrit par une première (a*) et une deuxième coordonnée (b*), qui représente la couleur, et par une troisième coordonnée (L*), qui représente la clarté,
**caractérisé en ce que**
l'unité de contrôle (5) qui y est fixée effectue l'appréciation de la qualité d'un matériau (1) à l'aide de la première (a*), la deuxième (b*) et la troisième (L*) du point de mesure (M) d'un espace chromatique d'évaluation.

Fig. 1

Fig. 2

EP 3 321 668 B1

Fig. 3

11

Fig. 4

dL*

X

delta E

delta a* b*

Δ

## Fig. 5

dL*

delta E

Δ

X

delta a* b*

## Fig. 6

dL*

delta E

delta a* b*

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1143236 B1
- EP 1018645 A1
- WO 2007012936 A2